# EUROPÄISCHE PATENTSCHRIFT

(11) **EP 3 624 985 B1**
(45) Veröffentlichungstag und Bekanntmachung des Hinweises auf die Patenterteilung: **14.06.2023**
(21) Anmeldenummer: 18746605.7
(22) Anmeldetag: 10.07.2018
(51) Int. Cl.: B23K 26/00, B22F 3/105, B23K 26/06, B23K 26/342, B23K 26/082, B29C 64/10, B23K 26/352, B23K 101/00, B23K 103/18

(54) **VERFAHREN ZUM AUSBILDEN EINER DEFINIERTEN OBERFLÄCHENRAUHEIT IN EINEN BEREICH EINES ADDITIV HERZUSTELLENDEN ODER HERGESTELLTEN BAUTEILS FÜR EINER STRÖMUNGSMASCHINE**
METHOD OF FORMING A DEFINED SURFACE ROUGHNESS IN A REGION OF A COMPONENT FOR A TURBOMACHINE, WHICH COMPONENT IS TO BE MANUFACTURED OR IS MANUFACTURED ADDITIVELY
PROCÉDÉ POUR FORMER UNE RUGOSITÉ DE SURFACE DÉFINIE DANS UNE ZONE D'UNE PIÈCE À FABRIQUER OU FABRIQUÉE DE MANIÈRE ADDITIVE POUR UNE TURBOMACHINE

(30) Priorität: 02.08.2017 DE 102017213378
(43) Veröffentlichungstag der Anmeldung: 25.03.2020
(73) Patentinhaber: Siemens Energy Global GmbH & Co. KG, 81739 München (DE)
(72) Erfinder: GEISEN, Ole, 10781 Berlin (DE)
(86) Internationale Anmeldenummer: PCT/EP2018/068594
(87) Internationale Veröffentlichungsnummer: WO 2019/025135

(56) Entgegenhaltungen:
- FR-A1- 2 980 380
- US-A1- 2005 211 343
- US-A1- 2016 076 374
- US-A1- 2017 182 562

## Beschreibung

Die vorliegende Erfindung betrifft ein Verfahren zum Ausbilden oder Einbringen einer definierten Oberflächenrauheit in einen Bereich eines, vorzugsweise aus einem Pulverbett, additiv herzustellenden oder hergestellten Bauteils.

Die Oberflächenrauheit ist vorzugsweise zur Identifizierung, Zertifizierung und/oder Individualisierung des Bauteils gewählt und/oder bestimmt.

Das Bauteil ist vorzugsweise für den Einsatz in einer Strömungsmaschine, vorzugsweise im Heißgaspfad einer Gasturbine vorgesehen. Das Bauteil umfasst oder besteht vorzugsweise aus einer Nickelbasis- oder Superlegierung, insbesondere einer nickel- oder kobaltbasierten Superlegierung. Die Legierung kann ausscheidungsgehärtet oder ausscheidungshärtbar sein.

Generative oder additive Herstellungsverfahren umfassen beispielsweise als Pulverbettverfahren das selektive Laserschmelzen (SLM) oder Lasersintern (SLS), oder das Elektronenstrahlschmelzen (EBM). Ebenso gehört das Laserauftragschweißen (LMD) zu den additiven Verfahren.

Ein Verfahren zum selektiven Laserschmelzen ist beispielsweise bekannt aus EP 2 601 006 B1 sowie aus US 2017182562 A1 (Offenbarung aller Merkmale des Oberbegriffs des Anspruchs 1), welche ein System und ein Verfahren zur additiven Herstellung sowie zur Reparatur von Metallkomponenten beschreibt.

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils direkt auf Basis einer entsprechenden CAD-Datei erfolgen kann.

Weiterhin ist die additive Fertigung besonders vorteilhaft für die Entwicklung oder Herstellung von Prototypen, welche beispielsweise mittels konventioneller subtraktiver oder spanender Verfahren oder Gusstechnologie nicht oder nicht effizient hergestellt werden können.

Bei der definierten oder vorbestimmten Oberflächenrauheit kann es sich um eine mittlere Rauheit, eine quadratische Rauheit, eine Rautiefe oder einen Mittenrauwert handeln.

Im Unterschied zu einem originären Aufbau eines Bauteils ausgehend von einer entsprechenden Konstruktions- oder CAD-Datei, besteht die Möglichkeit der optischen Vermessung eines Bauteilexemplars, um die Aufbaugeometrie festzulegen. Entsprechend erfasste Geometriewerte können anschließend einfach digitalisiert und dann als Basis für einen (erneuten) additiven Herstellungsprozess bzw. einen "Nachdruck" herangezogen werden. Ein solcher Nachdruck ist technisch einfach, wodurch ein gewisses Risiko einer Plagiierung oder "reverse engineering" von Bauteilen besteht, welche sich für die additive Herstellung prädestinieren.

Auch wäre beispielsweise eine Seriennummer durch die additive Fertigung einfach bei entsprechenden Ersatzteilen zu kopieren.

Gerade in dem Bereich von hochtemperaturbelasteten Bauteilen hätte eine minderwertige Kopie verheerende Auswirkungen, da ein kopiertes Bauteil nicht mit den vorgesehenen Prozessparametern, wie beispielsweise Bestrahlungsparametern, aufgebaut wurde und dadurch deutlich schlechtere mechanische und/oder thermomechanische Eigenschaften aufweist. Um zu verhindern, dass Drittanbieter, beispielsweise per SLM gefertigte Verschleiß- oder Ersatzteile einsetzen, sollten insbesondere Bauteile mit komplexen Geometrien eindeutig identifizierbar sein.

Es ist daher eine Aufgabe der vorliegenden Erfindung, Mittel anzugeben, mit denen eine eindeutige Identifizierung additiv gefertigter Bauteile möglich ist, wobei die Bauteile beispielsweise durch einen fälschungssicheren Identifizierungsbereich, charakterisiert werden können.

Diese Aufgabe wird durch den Gegenstand des unabhängigen Anspruchs 1 gelöst. Vorteilhafte Ausgestaltungen sind Gegenstand der abhängigen Patentansprüche.

Die vorliegende Erfindung betrifft ein Verfahren zum Ausbilden oder Einbringen einer definierten Oberflächenrauheit in einem Bereich eines, vorzugsweise aus einem Pulverbett, additiv herzustellenden oder hergestellten Bauteils. Der genannte Bereich stellt vorzugsweise einen Oberflächenbereich bzw. einen Teilbereich der Oberfläche des Bauteils dar. Bei dem beschriebenen Verfahren kann es sich ebenfalls um ein additives Herstellungsverfahren handelt, währenddessen die vorbestimmte Oberflächenrauheit in dem Bereich des Bauteils generiert wird.

Das Verfahren umfasst weiterhin das Einstellen eines Prozessparameters, insbesondere Bestrahlungsparameters, und/oder eines Bestrahlungsmusters oder einer Bestrahlungsgeometrie derart, dass ein Bauteilmaterial in dem Bereich unterhalb einer Oberfläche des Bauteils gezielt mit einer (vor)bestimmten Porosität versehen wird, welche beispielsweise geeignet ist, die definierte Oberflächenrauheit in dem Bauteil hervorzurufen oder zu generieren.

Der Ausdruck "Porosität" kann synonym mit "dichte" des entsprechenden Bauteilmaterials verwendet werden, da aus einem Pulverbett aufgeschmolzenes Material zwangsläufig eine bestimmte (wenn auch sehr geringe) Porosität aufweist.

Analog weist auch eine besonders ebene Bauteiloberfläche eine bestimmte Rauheit auf, sodass auch diese (ebene) Oberfläche durch seine Rauheit charakterisiert werden kann.

Das genannte Bestrahlungsmuster kann sich beispielsweise aus Bestrahlungsvektoren zusammensetzen, gemäß welcher ein Energiestrahl während der additiven Herstellung des Bauteils über eine Oberfläche aus Bauteilmaterial, insbesondere Pulverbettes, gerastert oder geführt wird.

Durch die Einstellung des Bestrahlungsparameters kann insbesondere eine Seitenfläche oder irgendeine andere Oberfläche des Bauteils in seiner Rauheit derart modifiziert werden, dass es dadurch in dem Bereich eindeutig identifizierbar und quasi-fälschungssicher gemacht wird.

Durch die Einstellung des Bestrahlungsmusters oder einer Bestrahlung oder Belichtungsgeometrie kann das Bauteil insbesondere an seinen Seitenflächen, das heißt an einer Seitenoder Mantelfläche parallel zu einer Aufbaurichtung des Bauteils, zur Generierung der vorbestimmten oder definierten Oberflächenrauheit modifiziert werden.

Mit anderen Worten kann durch die Konfektionierung der Oberflächenrauheit und das Einbringen dieser in den Bereich, beispielsweise im Falle eines Verschleißbauteils für eine Gasturbine, eindeutig einem Hersteller oder sogar einer bestimmten Herstellungscharge (möglicherweise als Unikat) zugeordnet werden.

Die bestimmte Porosität des verfestigten Bauteilmaterials wird vorzugsweise nahe der Oberfläche in dem Bereich des Bauteils generiert, sodass eine darauf weiter aufgebrachte Materialschicht Variationen oder Unebenheiten in seiner Oberfläche, mithin die definierte Oberflächenrauheit, aufweist.

Das Bauteilmaterial wird entsprechend der Erfindung in einer Tiefe von weniger als 500 µm unter der Oberfläche mit der Porosität versehen. Durch diese Ausgestaltung kann das Bauteil vorzugsweise oberflächennah mit der Porosität versehen werden, sodass diese Auswirkungen auf die Oberflächenstruktur oder die Ebenheit/Rauheit der Oberfläche hat.

Die Oberfläche beschreibt vorzugsweise die endgültige Oberfläche des Bauteils, nach dem Abschluss des additiven Aufbaus.

Die Tiefe beschreibt vorzugsweise den kürzesten Abstand der Porosität oder einer Pore innerhalb des Festkörpers des fertigen Bauteils zu seiner Oberfläche in dem Bereich.

Der Bereich kann einen Volumen- und/oder Oberflächenbereich beschreiben.

In einer Ausgestaltung wird das Bauteilmaterial in einer Tiefe zwischen 5 und 15 Bauteilschichten unter der Oberfläche mit der Porosität versehen.

In einer Ausgestaltung wird - zum Ausbilden der definierten Oberflächenrauheit in dem Bereich - ein Abstand von 50 bis 500 µm zwischen einem Flächenbestrahlungsvektor und einem Konturbestrahlungsvektor vorgesehen. Durch diese Ausgestaltung kann mit Vorteil ebenfalls - im Wege eines pulverbettbasierten additiven Herstellungsverfahrens - eine Oberflächenrauheit für das Bauteil in dem Bereich konfektioniert oder maßgeschneidert werden, da die beschriebenen Mittel eine erhöhte Wahrscheinlichkeit einer Porenbildung während des additiven Aufbaus hervorrufen.

Der Ausdruck "Kontur" oder "Konturbestrahlungsvektor" stellt vorzugsweise auf einen Rand oder eine Umrandung einer einzelnen aufzubauenden Materialschicht während der Herstellung des Bauteils ab.

In einer Ausgestaltung werden - zum Ausbilden der definierten Oberflächenrauheit in dem Bereich - senkrecht zu einer Schichtkontur verlaufende Flächenbestrahlungsvektoren mit einer Länge von weniger als 500 µm in dem entsprechenden Bestrahlungsmuster vorgesehen. Diese Ausgestaltung bietet ebenfalls die Vorteile, in dem Bereich eine bestimmte Oberflächenrauheit einzustellen.

Der Ausdruck "Flächenbestrahlungsvektor" oder Vektor bezeichnet vorliegend vorzugsweise eine Bestrahlungs- oder Belichtungstrajektorie oder einen entsprechenden Pfad, gemäß dem ein Energiestrahl, beispielsweise einen Laserstrahl, über das Pulverbett geführt wird, um entsprechendes Pulver selektiv und entsprechend der gewünschten Geometrie des Bauteils zu verfestigen. Der Energiestrahl kann dabei mäanderförmig über das Pulverbett geführt werden, um eine möglichst große Fläche umzuschmelzen und zu verfestigen. Einzelne Bestrahlungsbahnen, welche zu dem Vektor gehören können, sind dabei vorzugsweise nur geringfügig voneinander beabstandet, sodass ein Schmelzbad die gesamte aufzuschmelzen der Fläche des Pulverbettes erreicht.

Der Ausdruck "Konturbestrahlungsvektor" bezeichnet entsprechend vorzugsweise einen Bestrahlungspfad, der lediglich die äußeren Konturen, beispielsweise in Aufsicht auf das Bauteil betrachtet, abdeckt. Sinn solcher Konturfahrten ist es, ein per se mangelhaftes Bestrahlungs- oder Aufbauergebnis nach jeder aufgebauten Schicht durch eine entsprechende Konturbelichtung zu verbessern.

In einer Ausgestaltung kann die Porosität derart ausgebildet werden, dass diese mittels einer Durchstrahlungsprüfung, beispielsweise einer Computertomografie oder einer Transmissionselektronenmikroskopie, detektiert wird.

In einer Ausgestaltung stellt der Bereich einen Identifizierungsbereich dar.

In einer Ausgestaltung wird der Identifizierungsbereich von einer Identifizierungseinrichtung zur Identifizierung des Bauteils automatisch ausgewertet, und/oder beispielsweise mit einer Datenbank abgeglichen.

Der Bereich kann beispielsweise nur ein kleiner (Teil)Bereich sein und nur eine kleine Teilfläche der Oberfläche des Bauteils darstellen. Der Bereich kann beispielsweise einer versteckten oder schlecht zugänglichen Stelle vorgesehen werden.

In einer Ausgestaltung werden der Bestrahlungsparameter und/oder das Bestrahlungsmuster, beispielsweise von einem Computer und/oder Computerprogramm, zufällig eingestellt, um das Bauteil mit einem zufälligen Porenmuster zu versehen. Als Vorteil der zufälligen Ausgestaltung des Porenmusters und damit der zufälligen Ausgestaltung der Oberflächenrauheit, kann das Bauteil besonders sicher charakterisiert und/oder registriert, und somit quasi-fälschungssicher gemacht werden.

Ausgestaltungen, Merkmale und/oder Vorteile, die sich vorliegend auf das Verfahren beziehen, können ferner das Bauteil betreffen oder umgekehrt.

Weitere Einzelheiten der Erfindung werden nachfolgend anhand der Figuren beschrieben.
Figur 1 zeigt eine schematische Schnitt- oder Seitenansicht eines additiv hergestellten Bauteils.
Figur 2 zeigt eine vereinfachte schematische Schnitt- oder Seitenansicht des additiv hergestellten Bauteils.
Figur 3 deutet schematisch ein Bestrahlungsmuster für bzw. während der additiven Herstellung des Bauteils an.

In den Ausführungsbeispielen und Figuren können gleiche oder gleichwirkende Elemente jeweils mit den gleichen Bezugszeichen versehen sein. Die dargestellten Elemente und deren Grö-ßenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

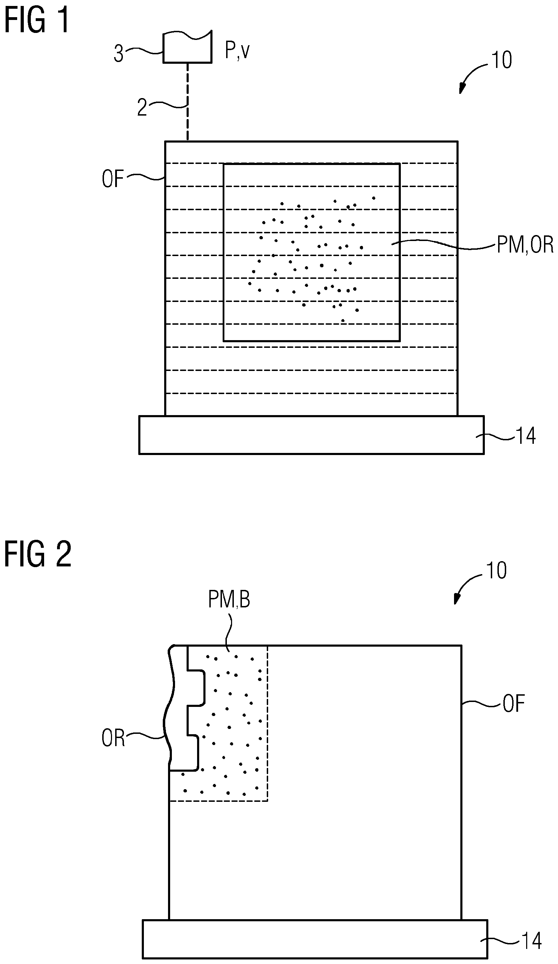

Figur 1 zeigt ein Bauteil 10 in einer schematischen Schnittansicht. Das Bauteil 10 ist insbesondere während seiner additiven Herstellung auf einer Bauplatte 14 gezeigt. Das entsprechende Herstellungsverfahren ist vorzugsweise selektives Laserschmelzen oder Elektronenstrahlschmelzen. Alternativ kann es sich um ein selektives Lasersinterverfahren handeln.

Das Bauteil 10 wird vorzugsweise schichtweise durch selektive Verfestigung von Schichten eines Bauteilmaterials (nicht explizit gekennzeichnet) hergestellt. Das Verfestigen erfolgt vorzugsweise durch einen Energiestrahl 2, ausgehend von einer Bestrahlungseinrichtung 3, vorzugsweise einer Laserstrahlquelle, mit einer entsprechenden Scan- oder Führungsoptik (nicht explizit gekennzeichnet). Das Bauteil weist eine Oberfläche OF auf. Die Oberfläche OF kann beispielsweise eine Seitenfläche des Bauteils 10 umfassen.

Bei dem Bauteil 10 handelt es sich vorzugsweise um ein Teil einer Strömungsmaschine, insbesondere einer Gasturbine, besonders bevorzugt einem im Einsatz der Turbine mit einem Heißgas beaufschlagten Teil.

Das Bauteil 10 weist weiterhin einen Bereich B auf. Der Bereich B ist vorzugsweise ein Oberflächenbereich. In dem Bereich B wurde das Bauteil 10 während seiner additiven Herstellung gemäß dem vorliegend beschriebenen Verfahren mit einem bestimmten Porenmuster PM versehen. Das Porenmuster PM ist in der Figur 1 durch einen Kontrast innerhalb eines Festkörpers des Bauteils angedeutet. Die hellen Bereiche innerhalb des Porenmusters PM können beispielsweise Poren oder kleine Hohlräume darstellen.

Während der additiven Herstellung lässt sich ein solches Porenmuster beispielsweise durch entsprechende Wahl oder entsprechendes Einstellen eines Bestrahlungsparameters, wie einer Scan- oder Bestrahlungsgeschwindigkeit v und beispielsweise einer Bestrahlungsleistung oder Laserleistung P, generieren oder gezielt einstellen. Entscheidend ist dabei vorzugsweise ein Energieeintrag, der im Wesentlichen aus Laserleistung und Scangeschwindigkeit bestimmt sein kann. Bei stark erhöhtem Energieeintrag wird Material beispielsweise verdampft, was zu Porenbildung führen kann. Bei zu geringem Energieeintrag können die Schmelzbäder abreißen oder Material teilweise unzureichend umgeschmolzen werden. Beides kann gezielt eingesetzt werden, um ein wiedererkennbares Muster zu generieren.

Zum Ausbilden der bestimmten Porosität und definierten Oberflächenrauheit (vergleiche Figur 2 weiter unten) kann in einem Fall nicht Teil dieser Erfindung im Vergleich zu einem Standard- oder Normverfahren oder -parametersatz, eine besonders hohe Bestrahlungsleistung und/oder eine niedrige Scangeschwindigkeit für den additiven Herstellungsprozess des Bauteils 10 eingestellt werden.

Umgekehrt und mit dem gleichen Ergebnis kann die Porosität und die Oberflächenrauheit entsprechend der Erfindung durch eine niedrige Bestrahlungsleistung und eine hohe Scangeschwindigkeit (im Vergleich zu einem Standardoder Normverfahren oder Parametersatz) eingestellt werden. Mit anderen Worten kann in beiden beschriebenen Fällen eine mangelhafte Pulververfestigung erzielt werden, welche geeignet ist, die gewünschte definierte Oberflächenrauheit hervorzurufen.

Jeweils bezogen auf einen Standard- oder Normprozess, der beispielsweise eine Materialdichte von 99,5% bzw. eine Porosität von 0,5 % hervorruft, kann die erfindungsgemäße Porosität in dem Bereich B - beispielsweise durch lokal angepasste Prozessparameter - zwischen 3 % und 5 %, insbesondere 4 % betragen.

Eine Bestrahlungsleistung beschreibt eine Laserleistung eines fokussieren Laserstrahls in einem Bereich zwischen 100 W und 500 W, wobei eine niedrige Bestrahlungsleistung am unteren Rand des Bereichs und eine hohe Bestrahlungsleistung am oberen Rand des Bereichs angesiedelt ist.

Eine Scangeschwindigkeit beschreibt eine Geschwindigkeit des Energiestrahls in einem Bereich zwischen 100 mm/s und 1000 mm/s, wobei eine niedrige Scangeschwindigkeit am unteren Rand des Bereichs und eine hohe Scangeschwindigkeit am oberen Rand des Bereichs angesiedelt ist. Das Porenmuster PM wird vorzugsweise unter der Oberfläche OF eingestellt, sodass die Oberfläche OF des Bauteils 10 selbst vorzugsweise porenfrei und/oder rissfrei ist.

Entsprechend der Erfindung ist das Bauteil in einer Tiefe von weniger als 500 µm unter der Oberfläche OF mit der Porosität versehen, sodass die "subkutane" Porosität eine definierte Oberflächenrauheit in dem Bereich B hervorruft oder generiert (vergleiche Figur 2).

Vorzugsweise ist der Bereich B einen Identifizierungsbereich, welcher von einer Identifizierungseinrichtung, beispielsweise einer optischen oder optischen Vermessungseinrichtung, zur Identifizierung des Bauteils automatisch ausgewertet und/oder mit einer Datenbank abgeglichen werden kann.

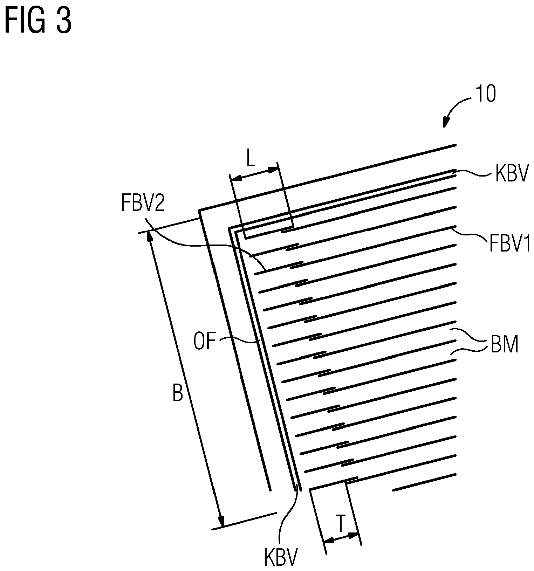

Der Bereich B kann beispielsweise eine Abmessung von 15 × 15 mm mit einer Tiefe von ca. 1 mm (vergleiche Figur 3) haben. Weiterhin ist der Bereich vorzugsweise derart bemessen, dass dieser durch eine Durchstrahlungsprüfung und/oder Materialprüfung, beispielsweise durch eine Röntgen- oder Computertomografie und/oder Transmissionselektronenmikroskopie durchstrahlt und so das Porenmuster PM registriert oder aufgenommen werden kann.

Der Bereich B kann - anders als in der Darstellung der Figur 1 gezeigt - nur einen besonders kleinen Teil der Oberfläche OF des Bauteils darstellen oder diesen beschreiben. Der Bereich B kann weiterhin einen versteckten und/oder einem gut zugänglichen Oberflächenbereich des Bauteils bezeichnet. Vorzugsweise entspricht der Bereich B einem nicht funktionalen Oberflächenbereich, beispielsweise keinem Bereich, welcher im Einsatz des Bauteils einer für die Funktion des Bauteils relevanten Strömung zugewandt oder strömungsaktiv ist.

Figur 2 zeigt eine schematische Seitenansicht des Bauteils 10 in einer vereinfachten Darstellung. Die genannte definierte Oberflächenrauheit des Bauteils 10 bzw. einer Oberfläche in dem Bereich B ist mit dem Bezugszeichen OR versehen. Der Bereich B ist oben links in der Ansicht zu sehen (vergleiche Strichelungen). In dem Bereich B ist das Porenmuster PM bzw. die Porosität gepunktet angedeutet. Es ist vorgesehen, dass die Poren im "Inneren" des Bauteils bzw. unter der Oberfläche OF angeordnet sind. Unter der Oberfläche OF rufen die Poren vorzugsweise die Oberflächenrauheit OR hervor, wobei jedoch die Oberfläche OF selbst porenfrei ist, um die Funktion des Bauteils nicht zu beeinträchtigen. Insbesondere bei heißgasbeaufschlagten Temperaturen wäre eine Oberflächen Porosität nachteilhaft, da ausgehend von dieser, Risse entstehen könnten sowie eine Oxidation oder Korrosion der Bauteile wahrscheinlicher würde.

Figur 3 zeigt schematisch eine Aufsicht bzw. eine Schnittansicht eines zumindest teilweise additiv hergestellten Bauteils. Alternativ oder zusätzlich kann lediglich ein Bestrahlungsmuster BM für eine zu verfestigende Schicht (vergleiche Aufsicht) angedeutet sein.

Das Bestrahlungs- oder Belichtungsmuster BM umfasst Konturbestrahlungsvektoren KBV, welche vorzugsweise lediglich einen Umriss des Bauteils 10 (vorzugsweise in Aufsicht auf das Pulverbett betrachtet) Bestrahlen, um Aufbau- oder Bestrahlungsfehler zu korrigieren, und/oder eine entsprechend glatte Oberfläche herzustellen.

Das Bestrahlungs- oder Belichtungsmuster BM umfasst weiterhin Flächenbestrahlungsvektoren FBV1, FBV2. Bei den Flächenbestrahlungsvektoren FBV1 handelt es sich um annähernd horizontal und parallel zueinander ausgerichtete Bestrahlungspfade, gemäß derer der Energiestrahl 2 vorzugsweise über das Pulverbett geführt wird, um dieses bzw. das Bauteilmaterial umzuschmelzen und zu verfestigen. Ein Abstand der Flächenbestrahlungsvektoren FBV (nicht explizit gekennzeichnet) wird vorzugsweise durch weitere Bestrahlungsparameter wie die Laserleistung oder die Pulverpartikelgröße und/oder weitere Parameter definiert.

Im linken Bereich der gezeigten Bauteilschicht sind weiterhin Flächenbestrahlungsvektoren FBV2 gezeigt, welche lediglich eine Länge L aufweisen. Durch eine selektive Bestrahlung eines Ausgangs- oder Bauteilmaterials für das Bauteil 10 entlang der Flächenbestrahlungsvektoren FBV2 können die erfinderischen Vorteile genutzt und die Oberflächenrauheit OR (vergleiche Figur 2) alternativ zu der oben beschriebenen Variation oder Einstellung der Bestrahlungsparameter eingestellt werden. Vorzugsweise kann die definierte Oberflächenrauheit OR in dem Bereich B eingestellt werden, indem in einem Randbereich oder entlang einer Kontur des Bauteils 10 wie in Figur 3 gezeigt Flächenbestrahlungsvektoren FBV2 mit einer Länge L von weniger als 500 µm, besonders bevorzugt weniger als 300 µm, vorgesehen werden.

Die weiterhin gezeigten längeren Flächenbestrahlungsvektoren FBV1 können zu einem Bestrahlungsmuster des Standes der Technik gehören.

Obwohl dies in Figur 3 nicht explizit gekennzeichnet ist, kann ein ähnlicher Effekt, d.h. ein ähnliches Maßschneidern oder Konfektionieren der Oberflächenrauheit OR erreicht werden, indem in dem Bereich B ein Abstand von 50 µm bis 500 µm, besonders bevorzugt zwischen 80 µm und 300 µm, zwischen einem Flächenbestrahlungsvektor FBV1 ("inskin"-Bestrahlung") und einem Konturbestrahlungsvektor KBV eingestellt oder vorgesehen wird. Auf diesem Wege wird eine entsprechende Porenbildung für das Porenmuster mit erhöhter Wahrscheinlichkeit durch die komplizierten Schmelz- und Erstarrungsprozesse während der additiven Herstellung hervorgerufen. Eine solche Situation würde entstehen, wenn die Flächenbestrahlungsvektoren FBV2 in Figur 3 weggelassen, aber die oben genannten Abstände eingestellt oder vorgesehen würden. Dann würde ähnlich wie beispielsweise im Falle einer erniedrigten Laserleistung, in dem Bereich B eine gewünschte Porosität oder mangelhafte Verfestigung von Basis- oder Bauteilmaterial, entstehen.

In Figur 3 ist weiterhin eine Tiefe T gezeigt. Die Tiefe T entspricht vorzugsweise einem Abstand senkrecht zur Oberfläche OF des Bauteils 10, in dem das Porenmuster PM erfindungsgemäß vorgesehen werden sollte, um die Oberflächenrauheit OR zu erzeugen. Die Tiefe T kann ein Maß zwischen 5 und 15 Schichtdicken beschreiben.

Das beschriebene Porenmuster PM stellt vorzugsweise ein zufälliges Porenmuster dar. Es ist zu bemerken, dass durch eine individuelle und/oder zufällige Wahl der Bestrahlungsparameter und/oder des Bestrahlungsmusters, Poren in ihrer Anordnung und Abmessung zufällig entstehen und somit das Bauteil 10 wie beschrieben fälschungssicher und eindeutig identifizierbar bzw. registriert gemacht werden kann. Zur Identifizierung oder Registrierung kann ebenfalls während des Aufbaus ein Rahmen (nicht explizit gekennzeichnet) um den Bereich B gelegt werden, beispielsweise strukturell oder durch visuelle Kennzeichnung.

Die Oberflächenrauheit OR kann beispielsweise durch einen Computer automatisch, durch entsprechende Wahl von Bestrahlungsmuster und/oder Bestrahlungsparameter, welche beispielsweise einer Datenbank entnommen werden können, eingestellt werden. Weiterhin kann die Oberflächenrauheit OR beispielsweise durch optische Mess- oder Scanverfahren erfasst werden. Gemäß der vorliegenden Erfindung kann auch vorgesehen sein, die definierte Oberflächenrauheit in oder an einem bereits vorgefertigten Bauteil anzubringen, beispielsweise um dieses nachträglich für einen bestimmten Hersteller zu kennzeichnen, zu identifizieren oder zu zertifizieren.

## Patentansprüche

1. Verfahren zum Ausbilden einer definierten Oberflächenrauheit (OR) in einen Bereich (B) eines additiv herzustellenden oder hergestellten Bauteils (10), umfassend das Einstellen eines Bestrahlungsparameters (P, v) und/oder eines Bestrahlungsmusters (KBV, FBV) derart, dass ein Bauteilmaterial in dem Bereich (B) unterhalb einer Oberfläche des Bauteils (10) mit einer bestimmten Porosität (PM) versehen wird, **dadurch gekennzeichnet, dass**
zum Ausbilden der definierten Oberflächenrauheit (OR) in dem Bereich (B), eine Bestrahlungsleistung (P), beispielsweise eine Laserleistung, und eine Scangeschwindigkeit (v) entsprechend einer erwarteten Oberflächenrauheit (OR) eingestellt werden und, dass,
zum Ausbilden der definierten Oberflächenrauheit (OR) in dem Bereich (B), eine niedrige Bestrahlungsleistung (P) und eine hohe Scangeschwindigkeit (v) eingestellt werden und, dass die niedrige Bestrahlungsleistung am unteren Rand des Bestrahlungsleistung-Bereichs zwischen 100 W und 500 W steht und, dass
die hohe Scangeschwindigkeit am oberen Rand des Scangeschwindigkeit-Bereichs zwischen 100 mm/s und 1000 mm/s steht, so dass
das Bauteilmaterial in einer Tiefe (T) von weniger als 500 µm unter der Oberfläche mit der Porosität (PM) versehen wird.

2. Verfahren gemäß Anspruch 1, wobei das Bauteilmaterial in einer Tiefe (T) zwischen 5 und 15 Schichtdicken unter der Oberfläche mit der Porosität (PM) versehen wird.

3. Verfahren gemäß einem der vorhergehenden Ansprüche, wobei, zum Ausbilden der definierten Oberflächenrauheit (OR) in dem Bereich (B), ein Abstand von 50 bis 500 µm zwischen einem Flächenbestrahlungsvektor (FBV) und einem Konturbestrahlungsvektor (KBV) vorgesehen wird.

4. Verfahren gemäß einem der vorhergehenden Ansprüche, wobei, zum Ausbilden der definierten Oberflächenrauheit (OR) in dem Bereich (B), senkrecht zu einer Schichtkontur verlaufende Flächenbestrahlungsvektoren (FBV) mit einer Länge von weniger als 500 µm vorgesehen werden.

5. Verfahren gemäß einem der vorhergehenden Ansprüche, wobei die Porosität (PM) derart ausgebildet wird, dass diese mittels einer Durchstrahlungsprüfung detektiert wird.

6. Verfahren gemäß einem der vorhergehenden Ansprüche, wobei der Bereich (B) einen Identifizierungsbereich darstellt, welcher von einer Identifizierungseinrichtung zur Identifizierung des Bauteils automatisch ausgewertet wird.

7. Verfahren gemäß einem der vorhergehenden Ansprüche, wobei der Bestrahlungsparameter (P, v) und/oder das Bestrahlungsmuster (KBV, FBV), beispielsweise von einem Computer, zufällig eingestellt werden, um das Bauteil (10) mit einem zufälligen Porenmuster (PM) zu versehen.

## Claims

1. Method for forming a defined surface roughness (OR) in a region (B) of a component (10) which is to be produced or is produced additively, comprising the setting of an irradiation parameter (P, v) and/or of an irradiation pattern (KBV, FBV) such that a component material in the region (B) below a surface of the component (10) is provided with a certain porosity (PM), **characterized in that**, to form the defined surface roughness (OR) in the region (B), an irradiation power (P), for example a laser power, and a scanning speed (v) are set in accordance with an expected surface roughness (OR), and **in that**, to form the defined surface roughness (OR) in the region (B), a low irradiation power (P) and a high scanning speed (v) are set, and **in that** the low irradiation power is at the lower bound of the irradiation power range between 100 W and 500 W, and **in that** the high scanning speed is at the upper bound of the scanning speed range between 100 mm/s and 1000 mm/s such that the component material is provided with the porosity (PM) in a depth (T) of less than 500 µm below the surface.

2. Method according to Claim 1, wherein the component material is provided with the porosity (PM) in a depth (T) between 5 and 15 layer thicknesses below the surface.

3. Method according to either of the preceding claims, wherein, to form the defined surface roughness (OR) in the region (B), a spacing of 50 to 500 µm is provided between a surface irradiation vector (FBV) and a contour irradiation vector (KBV).

4. Method according to any one of the preceding claims, wherein, to form the defined surface roughness (OR) in the region (B), surface irradiation vectors (FBV) extending perpendicularly to a layer contour and having a length of less than 500 µm are provided.

5. Method according to any one of the preceding claims, wherein the porosity (PM) is formed in such a way that the latter is detected by means of a radiographic examination.

6. Method according to any one of the preceding claims, wherein the region (B) represents an identification region, which is automatically analysed by an identification device to identify the component.

7. Method according to any one of the preceding claims, wherein the irradiation parameter (P, v) and/or the irradiation pattern (KBV, FBV) are set randomly, for example by a computer, in order to provide the component (10) with a random pore pattern (PM).

## Revendications

1. Procédé de formation d'une rugosité (OR) de surface définie dans une partie (B) d'une pièce (10) à fabriquer ou fabriquée de manière additive, comprenant le réglage d'un paramètre (P, v) d'exposition à un rayonnement et/ou d'un motif (KBV, FBV) d'exposition à un rayonnement, de manière à ce qu'un matériau de la pièce soit pourvu, dans la partie (B) en-dessous d'une surface de la pièce (10), d'une porosité (PM) déterminée, **caractérisé**
**en ce que**, pour la formation de la rugosité (OR) de surface définie dans la partie (B), on règle une puissance (P) d'exposition, par exemple une puissance laser, et une vitesse (v) de balayage conformément à une rugosité (OR) de surface escomptée, et
**en ce que**, pour la formation de la rugosité (OR) de surface définie dans la partie (B), on règle une puissance (P) d'exposition petite et une vitesse (v) de balayage grande, et en ce que la puissance d'exposition petite est, à la borne inférieure de la plage de puissance d'exposition, comprise entre 100 W et 500 W, et
**en ce que** la vitesse de balayage grande est, à la borne supérieure de la vitesse de la plage de la vitesse de balayage, comprise entre 100 mm/s et 1 000 mm/s, de manière à ce que le matériau de la pièce ait la porosité (PM) à une profondeur (T) de moins de 500 µm sous la surface.

2. Procédé suivant la revendication 1, dans lequel le matériau de la pièce a la porosité (PM) à une profondeur (T) comprise entre 5 et 15 épaisseurs de couche sous la surface.

3. Procédé suivant l'une des revendications précédentes, dans lequel, pour la formation de la rugosité (OR) de surface définie dans la partie (B), on prévoit une distance de 50 à 500 µm entre un vecteur (FBV) d'exposition de surface et un vecteur (KBV) d'exposition de contour.

4. Procédé suivant l'une des revendications précédentes, dans lequel, pour la formation de la rugosité (OR) de surface définie dans la partie (B), on prévoit des vecteurs (FBV) d'exposition de surface, s'étendant perpendiculairement à un contour de couche, d'une longueur de moins de 500 µm.

5. Procédé suivant l'une des revendications précédentes, dans lequel on forme la porosité (PM), de manière à ce que celle-ci soit détectée au moyen d'un contrôle de radiographie.

6. Procédé suivant l'une des revendications précédentes, dans lequel la partie (B) représente une partie d'identification, que l'on analyse automatiquement par un dispositif d'identification, pour l'identification de la pièce.

7. Procédé suivant l'une des revendications précédentes, dans lequel on règle aléatoirement le paramètre (P, v) d'exposition et/ou le motif (KBV, FBV) d'exposition, par exemple par un ordinateur, afin de donner au composant (10) un motif (PM) de pores aléatoire.
